Europäisches Patentamt

European Patent Office

Office européen des brevets

(19)

(11) Veröffentlichungsnummer: **0 048 240**

**A2**

(12) **EUROPÄISCHE PATENTANMELDUNG**

(21) Anmeldenummer: **81890146.4**

(22) Anmeldetag: **31.08.81**

(51) Int. Cl.³: **B 28 D 1/30**
**B 28 D 1/08**

(30) Priorität: **11.09.80 AT 4571/80**

(43) Veröffentlichungstag der Anmeldung:
**24.03.82 Patentblatt 82/12**

(84) Benannte Vertragsstaaten:
**DE FR IT**

(71) Anmelder: **Mayer, Wolfgang**
**Nonntalerhauptstrasse 102**
**A-5020 Salzburg(AT)**

(72) Erfinder: **Mayer, Wolfgang**
**Nonntalerhauptstrasse 102**
**A-5020 Salzburg(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Vorrichtung zum Kontursägen von Steinen.**

(57) Eine Vorrichtung zum Kontursägen von Steinen weist ein umlaufendes Sägeseil (9), das im Schnittbereich über Stützrollen (24) abgestützt ist, und einen Vorschubantrieb (22,23) für den Konturschnitt auf.

Um einerseits eine gute Seilführung sicherzustellen und anderseits eine den sich ändernden Vorschubrichtungen Rechnung tragende Seilabstützung gewährleisten zu können, sind die Stützrollen (24) um die Seilachse schwenkbar gelagert und in Abhängigkeit von der jeweiligen Vorschubrichtung schwenkverstellbar.

FIG.1

## Vorrichtung zum Kontursägen von Steinen

Die Erfindung bezieht sich auf eine Vorrichtung zum Kontursägen von Steinen mit einem umlaufenden Sägeseil, das im Schnittbereich über Stützrollen abgestützt ist, und mit einem Vorschubantrieb für den Konturschnitt.

Bei einer bekannten Vorrichtung dieser Art (DE-OS 27 54 200) wird das Sägeseil, das entweder als Diamantseil mit Schneiddiamanten bestückt ist oder dem Schneidmittel, beispielsweise Quarzsand, mit Wasser zugeführt werden, relativ zum Werkstück in zwei zueinander senkrechten Achsen gesteuert, so daß unter Berücksichtigung des Seildurchmessers jede gewünschte Kontur gesägt werden kann. Dabei wird vorzugsweise das Sägeseil, das in einem Schneidrahmen gelagert ist, mit dem Schneidrahmen in der einen Achse und das Werkstück in der anderen Achse bewegt, obwohl es durchaus möglich wäre, das Sägeseil oder das Werkstück alleine entsprechend in der Vorschubebene zu bewegen.

Nachteilig bei dieser bekannten Konstruktion ist allerdings, daß sich mit der beim Konturschneiden ändernden Vorschubrichtung auch die auf das Sägeseil wirkenden Schnittdrücke bezüglich ihrer Angriffsrichtung ändern, so daß durch die Seilabstützung vor allem nach einem längeren Betrieb keine genaue Seilführung mehr gewährleistet werden kann, was sich unmittelbar auf die Schnittqualität auswirkt. Außerdem

werden die Stützrollen für die Seilführung nur in einer Vorschubrichtung optimal belastet, so daß mit einer erhöhten Beanspruchung und damit mit einem größeren Verschleiß gerechnet werden muß, der wiederum die Führungsgenauigkeit des Seiles herabsetzt.

Der Erfindung liegt somit die Aufgabe zugrunde, diese Mängel zu vermeiden und eine Vorrichtung zum Kontursägen von Steinen der eingangs geschilderten Art so zu verbessern, daß einerseits eine gute Seilführung sichergestellt und anderseits eine den sich ändernden Vorschubrichtungen Rechnung tragende Seilabstützung gewährleistet wird.

Die Erfindung löst die gestellte Aufgabe dadurch, daß die Stützrollen um die Seilachse schwenkbar gelagert und in Abhängigkeit von der jeweiligen Vorschubrichtung schwenkverstellbar sind.

Durch die Schwenkverstellung der Stützrollen um die Seilachse kann für jede Vorschubrichtung erreicht werden, daß die durch die auftretenden Schnittdrücke wirksam werdenden Kräfte auf die Stützrollen senkrecht zu deren Drehachse stehen, so daß die Seitenwände der Seilrille in den Stützrollen vor einer größeren Belastung geschützt sind. Dies bedeutet bei den verwendeten Schneidmitteln eine geringe Abnützung der Seitenwände der Seilrillen und damit eine genaue Seilführung auch nach einem längeren Betrieb.

Um die Schwenkverstellung der Stützrollen in Abhängigkeit von der jeweiligen Vorschubrichtung konstruktiv in einfacher Weise sicherstellen zu können, ist in weiterer Ausbildung der Erfindung vorgesehen, daß die Stützrollen auf je einem drehbar gehaltenen Tragrohr gelagert sind, das das Sägeseil konzentrisch umschließt, einen Durchtrittsschlitz für die Stützrolle aufweist und

- 3 -

mit einem Schwenkantrieb verbunden ist. Über das das Sägeseil konzentrisch umschließende Tragrohr kann jede Stützrolle um die Seilachse verschwenkt werden. Zu diesem Zweck braucht am Tragrohr lediglich ein Schwenkantrieb anzugreifen, der entsprechend der jeweiligen Vorschubrichtung anzusteuern ist. Dieses Tragrohr muß selbstverständlich einen Durchtrittsschlitz für die auf ihm gelagerte Stützrolle aufweisen, damit die Stützrolle die ihr zukommende Aufgabe der Seilabstützung und -führung erfüllen kann. Sind mehrere Stützrollen vorgesehen, um mehrere Werkstücke gleichzeitig schneiden zu können, so können vorteilhaft die Schwenkverstellungen der Stützrollen von einem gemeinsamen Schwenkantrieb abgeleitet werden.

In der Zeichnung ist der Erfindungsgegenstand beispielsweise dargestellt. Es zeigen

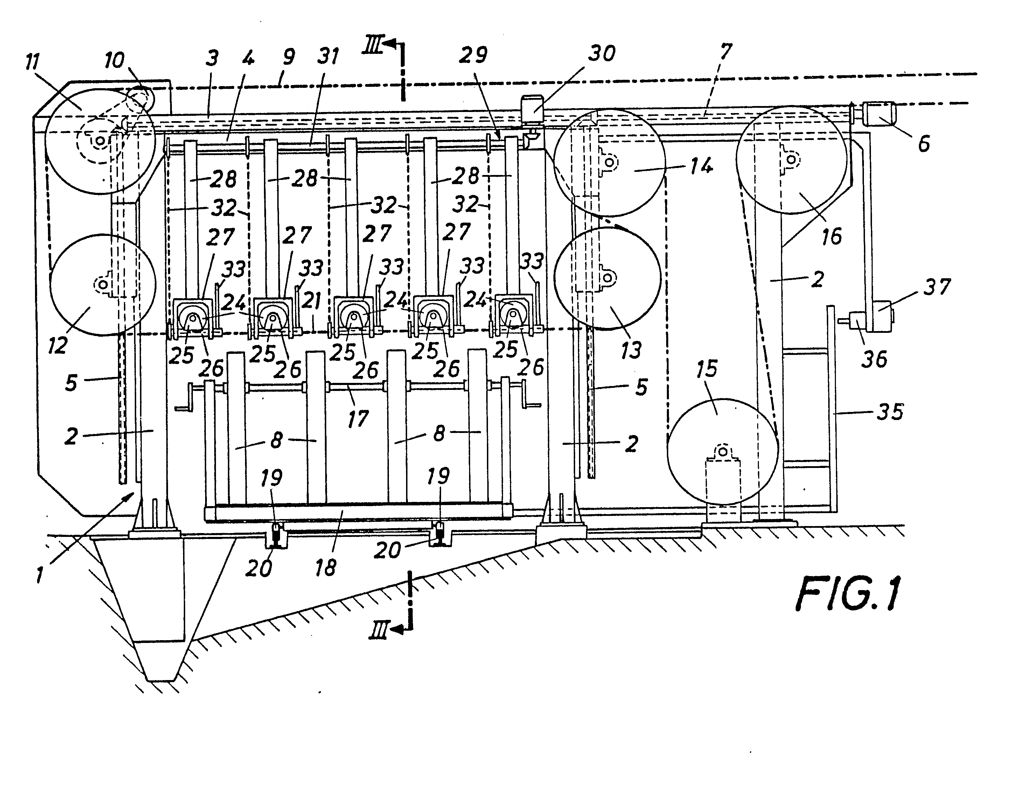

Fig. 1 eine erfindungsgemäße Vorrichtung zum Kontursägen von Steinen in einer Seitenansicht,

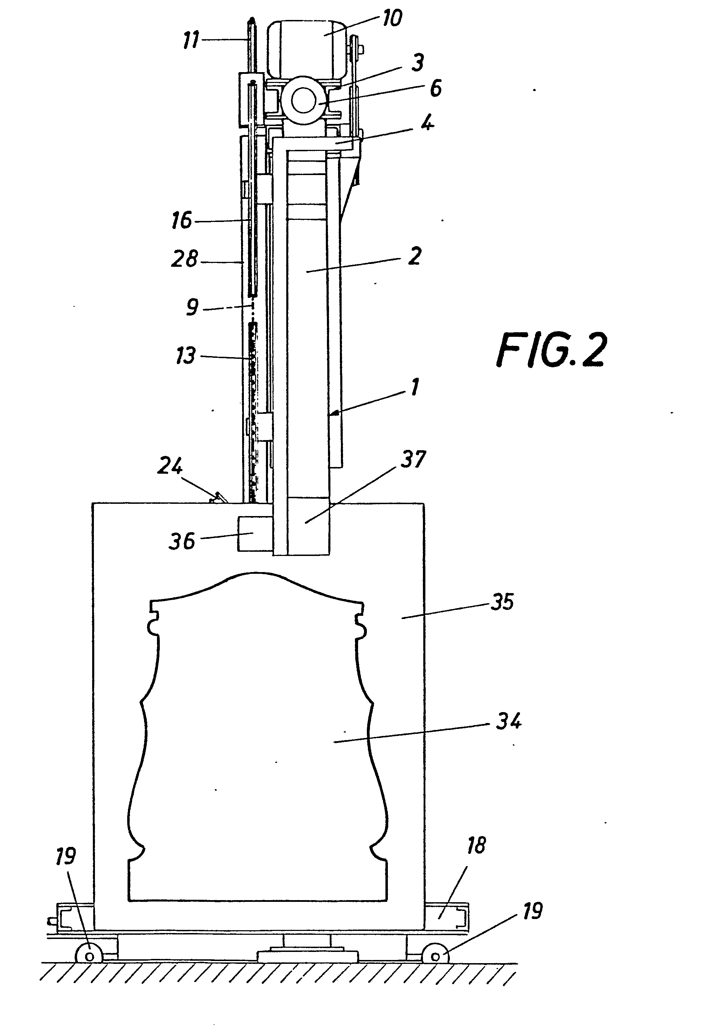

Fig. 2 diese Vorrichtung in einer Stirnansicht in einem größeren Maßstab und

Fig. 3 einen Schnitt nach der Linie III-III der Fig. 1, ebenfalls in einem größeren Maßstab.

Die dargestellte Vorrichtung zum Kontursägen von Kunst- oder Natursteinen besteht im wesentlichen aus einem Ständerrahmen 1, der aus vertikalen Stehern 2 und einem diese Steher 2 verbindenden Joch 3 zusammengesetzt ist, wobei in diesem Ständerrahmen 1 ein Schneidrahmen 4 vertikal verschiebbar geführt ist. Zur Verstellung des Schneidrahmens 4 dienen Gewindespindeln 5, die am Ständerrahmen 1 drehbar gelagert sind und in ein Muttergewinde des Schneidrahmens 4 eingreifen. Über einen Motor 6 und eine Antriebswelle 7 können die Gewindespindeln 5 verdreht werden, was je nach der Drehrichtung ein Heben oder Senken des Schneidrahmens 4 zur Folge hat.

Das zum Schneiden der Werkstücke 8 verwendete Sägeseil 9 ist endlos um die Umlenkrolle eines nicht dargestellten, mit Abstand von der Sägevorrichtung aufgestellten Feldständers geführt und wird von einer durch einen Antriebsmotor 10 angetriebenen Seilscheibe 11 bewegt, die am Ständerrahmen gelagert ist. Von dieser Seilscheibe 11 läuft das Sägeseil um eine frei drehbar gelagerte Seilscheibe 12 des Schneidrahmens 4 zu einer ebenfalls im Schneidrahmen gelagerten Seilscheibe 13, wobei zwischen den Seilscheiben 12 und 13 der Sägeschnitt erfolgt. Um beim Verschieben des Schneidrahmens keine die Seilspannung beeinflussenden Längenänderungen im Seilverlauf in Kauf nehmen zu müssen, ist das Sägeseil 9 von der Seilscheibe 13 zu einer weiteren Seilscheibe 14 des Schneidrahmens und von dort zu einer ortsfesten Seilscheibe 15 des Ständerrahmens 1 geführt, wobei die Anordnung so getroffen ist, daß eine durch die Verstellung des Schneidrahmens bedingte Längenänderung des Seiltrums zwischen den Seilscheiben 11 und 12 eine gleich große, aber gegensinnige Längenänderung des Seiltrums zwischen den Seilscheiben 14 und 15 bewirkt. Von der Seilscheibe 15 verläuft dann das Sägeseil 9 über eine Umlenkrolle 16 zurück zum Feldständer.

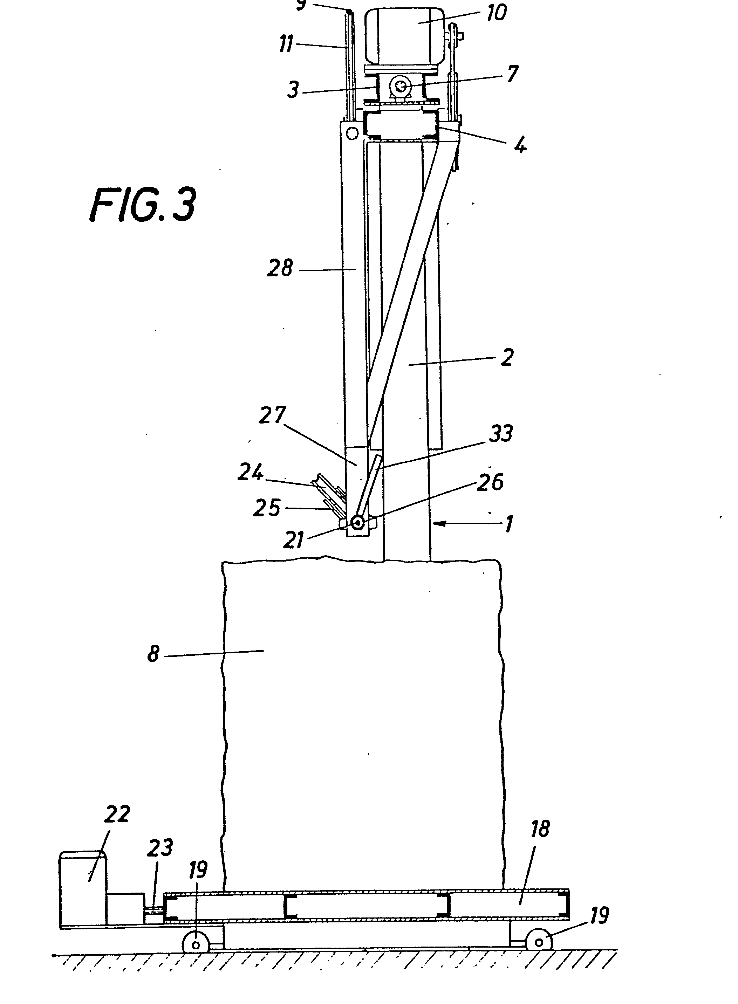

Die Werkstücke 8 sind mit Hilfe einer Klemmeinrichtung 17 auf einem Blockwagen 18 schneidgerecht gehalten, der über Rollen 19 auf Schienen 20 quer zum Arbeitstrum 21 des Sägeseiles 9 horizontal verfahren werden kann, und zwar mittels einer von einem Motor 22 antreibbaren Gewindespindel 23, wie dies in Fig. 3 angedeutet ist.

Zur Abstützung des Sägeseiles 9 im Schnittbereich sind Stützrollen 24 vorgesehen. Diese Stützrollen 24 sind in einem Lagerbock 25 gehalten, der auf einem das Arbeitstrum 21 des Sägeseiles 9 konzentrisch umschließenden Tragrohr 26 montiert ist. Dieses Tragrohr weist einen Durchtrittsschlitz für die jeweilige Stützrolle 24 auf und wird von einem gabelartigen Kopf 27 eines am Schneidrahmen 4 vorgesehen Trägers 28 um die Seilachse drehbar gehalten, so daß die Stützrollen 24 mittels der ihnen zugeordneten Tragrohre 26 um die Seilachse verschwenkt werden können. Diese Verschwenkung wird über einen Schwenkantrieb 29 sichergestellt, der aus einem Steuermotor 30 und einer Antriebswelle 31 besteht, von der der Antrieb der einzelnen Tragrohre 26 über Kettentriebe 32 abgeleitet wird. Die Versorgung des Schnittbereiches mit dem notwendigen Schneidmittel erfolgt über Schläuche 33, durch die beispielsweise ein Quarzsand-Wasser-Gemisch zugeführt wird.

Um eine gewünschte Kontur schneiden zu können, muß sowohl der Schneidrahmen 4 als auch der Blockwagen 18 entsprechend gesteuert werden. Gemäß dem Ausführungsbeispiel ist zu diesem Zweck eine die auszuschneidende Kontur bestimmende Vorlage 34 auf einem stirnseitig vorgesehenen Schablonenhalter 35 befestigt, welche Vorlage bezüglich ihres Umrisses durch eine optische Abtasteinrichtung 36 abgefahren wird. Diese optische Abtasteinrichtung 36 gibt die abgetasteten Werte bezüglich der notwendigen Stellwege für den Blockwagen 18 und den Schneidrahmen 4 als Sollwerte an eine Steuerung 37 weiter, über die die Motoren 22 und 6 für den Antrieb des Blockwagens 18 und des Schneidrahmens 4 angesteuert werden. Das Arbeitstrum 21 des Sägeseiles 9 wird folglich entsprechend der Vorlage 34 relativ zu den Werkstücken 8 bewegt, die dementsprechend gesägt werden.

Die Steuerung 37 beaufschlagt aber nicht nur die Antriebe für den Blockwagen 18 und den Schneidrahmen 4, sondern steuert auch die Schwenkverstellung der Stützrollen 24 in Abhängigkeit von der jeweiligen Vorschubrichtung des Arbeitstrums 21 des Sägeseiles. Die Vorschubrichtung läßt sich dabei in einfacher Weise über die Stellwege für den Blockwagen und den Schneidrahmen ermitteln, so daß der Steuermotor 30 für die Schwenkverstellung der Stützrollen 24 entsprechend angesteuert werden kann. Die Stützrollen 24 können somit den auftretenden Schneiddruck in günstigster Weise aufnehmen, was eine genaue Seilführung zur Folge hat.

- 7 -

Patentansprüche:

1. Vorrichtung zum Kontursägen von Steinen mit einem umlaufenden Sägeseil, das im Schnittbereich über Stützrollen abgestützt ist, und mit einem Vorschubantrieb für den Konturschnitt, dadurch gekennzeichnet, daß die Stützrollen (24) um die Seilachse schwenkbar gelagert und in Abhängigkeit von der jeweiligen Vorschubrichtung schwenkverstellbar sind.

2. Vorrichtung nach Anspruch 1, dadurch gekennzeichnet, daß die Stützrollen (24) auf je einem drehbar gehaltenen Tragrohr (26) gelagert sind, das das Sägeseil (9) konzentrisch umschließt, einen Durchtrittsschlitz für die Stützrolle (24) aufweist und mit einem Schwenkantrieb (29) verbunden ist.

FIG.1

FIG.2

0048240

FIG.3